# EUROPEAN PATENT SPECIFICATION

(11) **EP 4 132 299 B1**
(45) Date of publication and mention of the grant of the patent: **11.06.2025**
(21) Application number: 21716684.2
(22) Date of filing: 01.04.2021
(51) Int. Cl.: A23L 33/135, A23L 33/14, A23L 33/175, A23L 33/18, A23L 33/21, A23L 33/28

(54) **VITALITY DIETARY SUPPLEMENT**
VITALITÄTSNAHRUNGSMITTELZUSATZ
COMPLÉMENT ALIMENTAIRE DE VITALITÉ

(30) Priority: 06.04.2020 US 202063005725 P
(43) Date of publication of application: 15.02.2023
(73) Proprietor: Société des Produits Nestlé S.A., 1800 Vevey (CH)
(72) Inventor: SEIDENSTICKER, Kurt, Chicago, Illinois 60607 (US); COTE, Katie, Chicago, Illinois 60607 (US); CUTRI, Cristina, Chicago, Illinois 60607 (US); FRIESE, Corey, Chicago, Illinois 60607 (US); VARGAS, Luis, Chicago, Illinois 60607 (US)
(74) Representative: Gordon, Kirsteen Helen
(86) International application number: PCT/EP2021/058560
(87) International publication number: WO 2021/204644

(56) References cited:
- EP-A1- 0 507 872
- CN-A- 108 785 660
- CN-A- 109 221 864
- DE-A1- 10 221 403
- CARPENTER K. C. ET AL: "Baker's yeast [beta]-glucan supplementation increases monocytes and cytokines post-exercise: implications for infection risk?", BRITISH JOURNAL OF NUTRITION, vol. 109, no. 3, 10 May 2012 (2012-05-10), pages 478 - 486, XP055811186, ISSN: 0007-1145, DOI: 10.1017/S0007114512001407
- FUJIKI T ET AL: "Enhanced immunomodulatory activity and stability in simulated digestive juices of Lactobacillus plantarum L-137 by heat treatment", BIOSCIENCE, BIOTECHNOLOGY, AND BIOCHEMISTRY, JAPAN SOCIETY FOR BIOSCIENCE, BIOTECHNOLOGY, AND AGROCHEMISTRY, vol. 76, no. 5, 23 May 2012 (2012-05-23), pages 918 - 922, XP002759611, ISSN: 0916-8451, [retrieved on 20120507], DOI: 10.1271/BBB.110919
- YOSHITAKA HIROSE ET AL: "Daily Intake of Heat-Killed Lactobacillus plantarum L-137 Augments Acquired Immunity in Healthy Adults", THE JOURNAL OF NUTRITION, AMERICAN SOCIETY FOR NUTRITION, US, vol. 136, no. 12, 1 December 2006 (2006-12-01), pages 3069 - 3073, XP008148083, ISSN: 0022-3166

## Description

### FIELD OF THE INVENTION

The present invention is directed to improving immune function by improving or increasing the function of immune cells, promoting adequate hydration, and supplying essential nutrients and amino acids that the immune system requires to function. The dietary supplement composition of the present invention comprises: Collagen Peptides, I-glutamine, I-arginine, Baker's Yeast Beta Glucan, I-tryptophan, Heat-Killed Lactobacillus plantarum, and optionally vitamins, and minerals. Immune system function is improved using this combination of components.

### BACKGROUND OF THE INVENTION

Every day, thousands of people succumb to the common cold, flu, or other contagious illnesses such as Coronavirus disease (COVID). Many people choose to supplement their diet with functional foods or dietary supplements in order to help bolster their immune system and put themselves in a better position to ward off these illnesses. The ingestion of capsules, tablets, nutritional beverages, or drink powder mixes has been a preferred method to help promote these immune-supporting functions, either by taking daily or immediately before and during the onset of symptoms.

While adequate nutrition, sleep, and practicing good hygiene such as washing hands or avoiding highly congested areas of human traffic are the front lines of defense in supporting the immune system and avoiding a contagious illness, certain ingestible dietary supplements and ingredients have the potential to enhance and improve the function of the immune system and provide the body the support it needs to fight off illness. These parameters can include improving or increasing the function of immune cells, promoting adequate hydration, and supplying essential nutrients and amino acids that the immune system requires to function.

Research has shown that several dietary supplement ingredients have inherit properties that support these immune functions including: Sodium, Potassium, Magnesium, Vitamin C, Vitamin D, Zinc, Collagen, I-glutamine, I-arginine, I-tryptophan, Wellmune^{®} Baker's Yeast Beta Glucan, Immuno-LP20R^{®} (Heat-Killed Lacto-bacillus Plantarum L-137). Various prior art documents disclose compositions comprising at least one of these ingredients, e.g. CN108785660, DE10221403, EP0507872, Carpenter K. C. et al, British Journal of Nutrition, 109(3), 2012, 478-486, CN 109221864, Fujiki, T et al., Bioscience, Biotechnology and Biochemistry, Japan Society for Bioscience, Biotechnology and Agrochemistry, 76(5), 2012, 918-922 and Yoshitaka Hirose et al, The Journal of Nutrition, American Society for Nutrition, 136(12), 2006, 3069-3073.

There remains a need to improve immune function by providing essential vitamins and minerals, amino acids, and immune-enhancing specialty ingredients. The present invention resolves this deficiency and enhances the uptake of these ingredients and helps support immune function.

### SUMMARY OF THE INVENTION

The present invention is directed to a dietary supplement composition comprising collagen in an amount of 20 to 54 weight percent of the composition, I-glutamine in an amount of 7 to 23 weight percent of the composition, I-arginine in an amount of 2 to 6 weight percent of the composition, Baker's Yeast Beta Glucan in an amount of 1 to 3.1 weight percent of the composition, I-tryptophan in an amount of 0.2 to 0.6 weight percent of the composition, and Heat-Killed Lactobacillus Plantarum L-137 in an amount of 0.2 to 0.6 weight percent of the composition for use in improving immune system function.

The compositions of the present invention are intended to support and enhance immune system function.

### DETAILED DESCRIPTION OF THE INVENTION

The present invention relates to a dietary supplement composition that may be consumed as a supplement to support and enhance immune system function.

The compositions of the present invention comprise collagen, preferably in the form of hydrolyzed collagen peptides, in combination with I-glutamine, I-arginine, Baker's Yeast Beta Glucan, I-tryptophan, Heat-Killed Lactobacillus Plantarum, optionally, additional vitamins and minerals.

The composition may be administered in the form of a liquid, solution, suspension, powder, or gel. If in powder form, the powder is mixed in a soluble liquid prior to administration as directed.

Collagen is present in the composition in an amount of about 20 to 54 weight percent of the composition, or about 27 to 46 weight percent of the composition. Alternatively, collagen may be present in the composition in an amount of about 1-9 grams/serving, about 3-7 grams/serving, or about 4-6 grams/serving. In a preferred embodiment, collagen may be present in the composition in an amount of about 5 grams/serving. Collagen is a protein and may be present in any available form in the composition. However, the present invention preferably uses collagen peptides. Collagen peptides may be sourced from any known source, including but not limited to, beef, chicken, fish, eggshell membrane, and chicken egg whites.

L-glutamine is present in the composition in an amount of about 7-23 weight percent, or about 10-19 weight percent. L-glutamine may be present in the composition in an amount of about 0.5-4.0 g/serving, about 1-3 g/serving, about 1.5-2.5 g/serving, or about 2 g/serving.

L-arginine is present in the composition in an amount of about 2-6 weight percent, or about 3-5 weight percent. L-arginine may be present in the composition in an amount of about 0.1-1 g/serving, about 0.25-0.75 g/serving, about 0.4-0.6 g/serving, or about 0.5 g/serving.

Baker's Yeast Beta Glucan is present in the composition in an amount of about 1-3.1 weight percent, or about 1.3-2 weight percent. Baker's Yeast Beta Glucan may be present in the composition in an amount of about 0.05-0.5 g/serving, about 0.15-0.4 g/serving, about 0.2-0.3 g/serving, or about 0.25 g/serving. In a preferred embodiment, Wellmune^{®} Baker's Yeast Beta Glucan is used.

L-tryptophan is present in the composition in an amount of about 0.2-0.6 weight percent, or about 0.3-0.5 weight percent. L-tryptophan may be present in the composition in an amount of about 0.01-0.1 g/serving, about 0.025-0.075 g/serving, about 0.04-0.06 g/serving, or about 0.05 g/serving.

Heat-Killed Lactobacillus Plantarum L-137 is present in the composition in an amount of about 0.2-0.6 weight percent, or about 0.3-0.5 weight percent. Heat-Killed Lactobacillus Plantarum L-137 may be present in the composition in an amount of about 0.01-0.1 g/serving, about 0.025-0.075 g/serving, about 0.04-0.06 g/serving, or about 0.05 g/serving. In a preferred embodiment, Immuno-LP20^{®} (Heat-Killed Lactobacillus Plantarum L-137) is used.

Additional nutrients may be used in the composition including electrolytes, vitamins, minerals, and other dietary supplements. Suitable electrolyte minerals include, but are not limited to calcium, sodium, potassium, magnesium, calcium, bicarbonate, chloride, zinc and phosphate. The total amount of electrolyte minerals may be added to the composition in an amount of about 7-39 weight percent of the composition, about 10-23, or about 15-21 weight percent of the composition. Alternatively, the total electrolytes may be present in a range of about 1-5 grams/serving, about 1.5-3 grams/serving, or about 2.25-2.75 grams/serving.

Sodium may be present in any form, such as sea salt, iodized salt, sodium bicarbonate, or Himalayan pink sea salt, in an amount of about 0.2-1 grams/serving or 0.3-0.7 grams/serving, or about 1.3-8 weight percent or about 2-6 weight percent of the total composition.

Potassium may be present in any suitable form, such as a potassium citrate, potassium chloride, potassium sorbate, or the like. Potassium may be present in an amount of about 0.1-2 grams/serving or about 0.2-1 grams/serving, or about 0.7-15 or about 1.3-8 weight percent of the total composition.

Magnesium may be present in any suitable form, such as a magnesium citrate, magnesium oxide, magnesium lysinate-glycinate chelate, or magnesium malate. Magnesium may be present in an amount of about 0.01-0.2 grams/serving or about 0.02-0.1 grams/serving, or about 0.1-1.5 or about 0.1-0.8 weight percent of the total composition.

Zinc may be present in any suitable form, such as a zinc sulfate or zinc citrate. Zinc may be present in an amount of about 0.01-0.2 grams/serving or about 0.01-0.1 grams/serving, or about 0.1-1.5 or about 0.1-0.8 weight percent of the total composition.

Vitamins may further be added to the composition. Any vitamins suitable for ingestion in a dietary supplement is suitable for use. Suitable vitamins include but are not limited to Vitamin B, including Vitamin B1 (e.g., as thiamine chloride), Vitamin B2 (e.g., as riboflavin), Vitamin B3 (e.g., niacinamide), Vitamin B6 (e.g., as pyridoxine HCl), Vitamin B5 (e.g., as pantothenic acid or D-calcium pantothenate), Vitamin B12 (cyanocobalamin), folate (e.g., as folic acid), Vitamin C (e.g., as sodium ascorbate), Vitamin D, Vitamin E, etc. In the context of the present invention, each of the vitamins may be independently present in the composition in an amount of about 0.01-2 grams/serving, about 0.5-1.5 grams/serving, about 0.75-1.25 grams/serving, or about 0.001-15.4, about 3-12, or about 5-10 weight percent of the total composition.

Moreover, the composition may be flavored using any known natural flavors to enhance the flavor of the composition. Additionally, other additives suitable for dietary supplements, including but not limited to, monk fruit extract, Himalayan pink sea salt, fruit and vegetable juice powder, beta-carotene, citric acid, and malic acid may be present.

In accordance with the present invention, suitable compositions include, but are not limited, to those described in Table 1.

**TABLE 1**

| **Ingredient** | **Amount per serving** | **% Daily Value** |
|---|---|---|
| Collagen peptides (from bovine) | 5 g | ** |
| L-Glutamine | 2 g | ** |
| L-Arginine | 500 mg | ** |
| Wellmune baker's yeast beta glucan (from Saccharomyces cerevisiae) | 250 mg | ** |
| L-Tryptophan | 50 mg | ** |
| Immuno-LP20 (heat-killed Lactobacillus plantarum strain L-137) | 50 mg | ** |
| Vitamin C | 1000 mg | 1,111% |
| Vitamin D (as cholecalciferol) | 20 mcg | 100% |
| Niacin (as niacinamide) | 8 mg | 100% |
| Vitamin B6 (as pyridoxine HCl) | 1.7 mg | 100% |
| Vitamin B12 (as cyanocobalamin) | 4.8 mcg | 200% |
| Magnesium (as magnesium citrate) | 50 mg | 12% |
| Zinc (as zinc citrate) | 22 mg | 200% |
| Sodium | 500 mg | 22% |
| Potassium (as potassium citrate) | 400 mg | 9% |
| **Ingredient** | **Amount per serving** | **% Daily Value** |

| | | |
|---|---|---|
| **Daily Value Not Established | | |

In an embodiment of the present invention, the caloric intake of the supplement is less than about 100 calories, less than about 75 calories, or about 30 calories per serving. Additionally, the amount of carbohydrates and total sugars in the composition is desirably low. For example, the carbohydrates may be present in an amount of less than 10 grams/serving, less than 7 grams/serving, less than 5 grams/serving, about 2 grams/serving, or about 1 grams/serving. Similarly, the total sugars is desirably kept low, e.g., less than 6 grams/serving, less than 5 grams/serving, or about 0 gram/serving. As noted above, the content of the protein, in the form of collagen or collagen peptides, is high, preferably above 2 grams/serving, above 4 gram/serving, or about 5 grams/serving.

### EXAMPLE 1

A composition of the formula depicted in Table 1 was prepared.

## Claims

1. A dietary supplement composition comprising collagen in an amount of 20 to 54 weight percent of the composition, I-glutamine in an amount of 7 to 23 weight percent of the composition, I-arginine in an amount of 2 to 6 weight percent of the composition, Baker's Yeast Beta Glucan in an amount of 1 to 3.1 weight percent of the composition, I-tryptophan in an amount of 0.2 to 0.6 weight percent of the composition, and Heat-Killed Lactobacillus Plantarum L-137 in an amount of 0.2 to 0.6 weight percent of the composition for use in improving immune system function.

2. The dietary supplement composition of claim 1, wherein the collagen is present in the form of hydrolyzed collagen peptides.

3. The dietary supplement composition of claim 1 or 2, wherein the composition further comprises electrolyte minerals and wherein total amount of electrolyte minerals is present in an amount of 10 to 23 weight percent of the total composition.

4. The dietary supplement composition of claim 1 or 2, wherein the composition further comprises vitamins suitable for ingestion in a dietary supplement and wherein each such vitamin is present in an amount of 3-12 weight percent of the total composition.

5. The dietary supplement composition of any one of claims 1 to 4, wherein the composition is a powder.

6. The dietary supplement composition of any one of claims 1 to 4, wherein the composition is a liquid.

7. The dietary supplement composition of claim 1, wherein collagen is present in an amount of 27 to 46 weight percent of the composition, I-glutamine in an amount of 10 to 19 weight percent of the combination, I-arginine in an amount of 3 to 5 weight percent of the composition, Baker's Yeast Beta Glucan in an amount of 1.3 to 2 weight percent of the composition, I-tryptophan in an amount of 0.3 to 0.5 weight percent of the composition, and Heat-Killed Lactobacillus Plantarum L-137 in an amount of 0.3 to 0.5 weight percent of the composition.

8. The dietary supplement composition of claims 7 or 8, wherein the composition further comprises electrolyte minerals and wherein total amount of electrolyte minerals is present in an amount of 15 to 21 weight percent of the total composition.

9. The dietary supplement composition of claims 7 or 8, wherein the composition further comprises vitamins suitable for ingestion in a dietary supplement and wherein each such vitamin is present in an amount of 5-10 weight percent of the total composition.

10. The dietary supplement composition of any one of claims 7 to 10, wherein the composition is a powder.

11. The dietary supplement composition of any one of claims 7 to 10, wherein the composition is a liquid.

## Patentansprüche

1. Nahrungsergänzungszusammensetzung, umfassend Kollagen in einer Menge von 20 bis 54 Gewichtsprozent der Zusammensetzung, I-Glutamin in einer Menge von 7 bis 23 Gewichtsprozent der Zusammensetzung, I-Arginin in einer Menge von 2 bis 6 Gewichtsprozent der Zusammensetzung, Bäckerhefe-Beta-Glucan in einer Menge von 1 bis 3,1 Gewichtsprozent der Zusammensetzung, I-Tryptophan in einer Menge von 0,2 bis 0,6 Gewichtsprozent der Zusammensetzung und hitzeabgetötetes Lactobacillus Plantarum L-137 in einer Menge von 0,2 bis 0,6 Gewichtsprozent der Zusammensetzung zur Verwendung bei einer Verbesserung der Funktion des Immunsystem.

2. Nahrungsergänzungsmittelzusammensetzung nach Anspruch 1, wobei das Kollagen in Form von hydrolysierten Kollagenpeptiden vorliegt.

3. Nahrungsergänzungsmittelzusammensetzung nach Anspruch 1 oder 2, wobei die Zusammensetzung ferner Elektrolytmineralien umfasst und wobei die Gesamtmenge an Elektrolytmineralien in einer Menge von 10 bis 23 Gewichtsprozent der Gesamtzusammensetzung vorliegt.

4. Nahrungsergänzungsmittelzusammensetzung nach Anspruch 1 oder 2, wobei die Zusammensetzung ferner Vitamine umfasst, die für eine Einnahme in einem Nahrungsergänzungsmittel geeignet sind, und wobei jedes dieser Vitamine in einer Menge von 3 bis 12 Gewichtsprozent der Gesamtzusammensetzung vorliegt.

5. Nahrungsergänzungsmittelzusammensetzung nach einem der Ansprüche 1 bis 4, wobei die Zusammensetzung ein Pulver ist.

6. Nahrungsergänzungsmittelzusammensetzung nach einem der Ansprüche 1 bis 4, wobei die Zusammensetzung eine Flüssigkeit ist.

7. Nahrungsergänzungszusammensetzung nach Anspruch 1, wobei Kollagen in einer Menge von 27 bis 46 Gewichtsprozent der Zusammensetzung, I-Glutamin in einer Menge von 10 bis 19 Gewichtsprozent der Kombination, I-Arginin in einer Menge von 3 bis 5 Gewichtsprozent der Zusammensetzung, Bäckerhefe-Beta-Glucan in einer Menge von 1,3 bis 2 Gewichtsprozent der Zusammensetzung, I-Tryptophan in einer Menge von 0,3 bis 0,5 Gewichtsprozent der Zusammensetzung und hitzeabgetöteter Lactobacillus Plantarum L-137 in einer Menge von 0,3 bis 0,5 Gewichtsprozent der Zusammensetzung vorliegen.

8. Nahrungsergänzungsmittelzusammensetzung nach Anspruch 7 oder 8, wobei die Zusammensetzung ferner Elektrolytmineralien umfasst und wobei die Gesamtmenge an Elektrolytmineralien in einer Menge von 15 bis 21 Gewichtsprozent der Gesamtzusammensetzung vorliegt.

9. Nahrungsergänzungsmittelzusammensetzung nach Anspruch 7 oder 8, wobei die Zusammensetzung ferner Vitamine umfasst, die für die Einnahme in einem Nahrungsergänzungsmittel geeignet sind, und wobei jedes dieser Vitamine in einer Menge von 5 bis 10 Gewichtsprozent der Gesamtzusammensetzung vorliegt.

10. Nahrungsergänzungsmittelzusammensetzung nach einem der Ansprüche 7 bis 10, wobei die Zusammensetzung ein Pulver ist.

11. Nahrungsergänzungsmittelzusammensetzung nach einem der Ansprüche 7 bis 10, wobei die Zusammensetzung eine Flüssigkeit ist.

## Revendications

1. Composition de complément alimentaire comprenant du collagène en une quantité de 20 à 54 pour cent en poids de la composition, de la I-glutamine en une quantité de 7 à 23 pour cent en poids de la composition, de la I-arginine en une quantité de 2 à 6 pour cent en poids de la composition, du bêta-glucane de levure de boulanger en une quantité de 1 à 3,1 pour cent en poids de la composition, du I-tryptophane en une quantité de 0,2 à 0,6 pour cent de la composition, et du Lactobacillus Plantarum L-137 tué à la chaleur en une quantité de 0,2 à 0,6 pour cent de la composition pour utilisation dans l'amélioration de la fonction du système immunitaire.

2. Composition de complément alimentaire selon la revendication 1, dans laquelle le collagène est présent sous forme de peptides de collagène hydrolysés.

3. Composition de complément alimentaire selon la revendication 1 ou 2, dans laquelle la composition comprend en outre des minéraux électrolytiques et dans laquelle la quantité totale de minéraux électrolytiques est présente en une quantité de 10 à 23 pour cent en poids de la composition totale.

4. Composition de complément alimentaire selon la revendication 1 ou 2, dans laquelle la composition comprend en outre des vitamines adaptées à l'ingestion dans un complément alimentaire et dans laquelle chacune de ces vitamines est présente en une quantité de 3 à 12 pour cent en poids de la composition totale

5. Composition de complément alimentaire selon l'une quelconque des revendications 1 à 4, dans laquelle la composition est une poudre.

6. Composition de complément alimentaire selon l'une quelconque des revendications 1 à 4, dans laquelle la composition est un liquide.

7. Composition de complément alimentaire selon la revendication 1, dans laquelle le collagène est présent en une quantité de 27 à 46 pour cent en poids de la composition, la I-glutamine en une quantité de 10 à 19 pour cent en poids de la combinaison, la I-arginine en une quantité de 3 à 5 pour cent en poids de la composition, le bêta-glucane de levure de boulanger en une quantité de 1,3 à 2 pour cent en poids de la composition, le I-tryptophane en une quantité de 0,3 à 0,5 pour cent en poids de la composition, et le Lactobacillus Plantarum L-137 tué à la chaleur en une quantité de 0,3 à 0,5 pour cent en poids de la composition.

8. Composition de complément alimentaire selon les revendications 7 ou 8, dans laquelle la composition comprend en outre des minéraux électrolytiques et dans laquelle la quantité totale de minéraux électrolytiques est présente en une quantité de 15 à 21 pour cent en poids de la composition totale.

9. Composition de complément alimentaire selon les revendications 7 ou 8, dans laquelle la composition comprend en outre des vitamines adaptées à l'ingestion dans un complément alimentaire et dans laquelle chacune de ces vitamines est présente en une quantité de 5 à 10 pour cent en poids de la composition totale.

10. Composition de complément alimentaire selon l'une quelconque des revendications 7 à 10, dans laquelle la composition est une poudre.

11. Composition de complément alimentaire selon l'une quelconque des revendications 7 à 10, dans laquelle la composition est un liquide.
